# EUROPEAN PATENT APPLICATION

(11) **EP 3 979 475 A1**
(43) Date of publication of application: **06.04.2022**
(21) Application number: 20737505.6
(22) Date of filing: 27.05.2020
(51) Int. Cl.: H02K 41/03

(54) **SWITCHED RELUCTANCE MACHINE**

(30) Priority: 27.05.2019 ES 201930462
(71) Applicant: Centro de Investigaciones Energéticas, Medioambientales y Tecnológicas, O.A., M.P., 28040 Madrid (ES); Wedge Global, S.L., 35017 Las Palmas de Gran Canaria (ES)
(72) Inventor: GARCÍA-TABARÉS RODRÍGUEZ, Luis, 28040 Madrid (ES); LAFOZ PASTOR, Marcos, 28040 Madrid (ES); BLANCO AGUADO, Marcos, 28040 Madrid (ES); OBRADORS CAMPOS, Diego, 28040 Madrid (ES); TORRES MIRANDA, Jorge Jesús, 28040 Madrid (ES); GARCÍA LORENZO, Francisco Enrique, 35017 Las Palmas de Gran Canaria (ES)
(74) Representative: Pons
(86) International application number: PCT/ES2020/070348
(87) International publication number: WO 2020/240064

(57) **Abstract**

In accordance with the configuration proposed for the magnetic circuit of the machine of the present invention, the amount of iron used for both the passive poles and the windings on the active side is reduced with respect to other conventional distributions. Furthermore, a predominantly azimuthal magnetic flux is created, which guarantees an efficient production of force for any relative position between the active side and the passive side, even for high iron saturation values.

## Description

### OBJECT OF THE INVENTION

The present invention can be included in the technical field of switched reluctance machines or SRM which can operate as a generator or a motor and which have an active side with windings wound around iron cores and a passive side that only has iron poles. Both sides move in relation to each other in a direction that is perpendicular to the plane that contains the magnetic flux lines.

According to a first object of the invention, the invention specifically relates to a switched reluctance machine in which the magnetic circuit of each and every one of the phases thereof is arranged according to a toroidal configuration, creating a magnetic flux in an azimuthal direction. This invention is based on a type of switched reluctance machine with no limit to the number of windings and poles it can have and it is based on the way in which the flux lines close the magnetic circuit in an azimuthal form.

### BACKGROUND OF THE INVENTION

Switched Reluctance Machines (SRM) are based on a mobile magnetic circuit formed by iron core windings and iron poles that aim to maximise or minimise the reluctance thereof when the windings are sequentially turned on and turned off.

Conventional SRMs use prismatic or cylindrical configurations in which the magnetic flux is closed by an iron return yoke, the length of which varies depending on the chosen geometry.

The main feature, which is common to all existing geometries, is that the magnetic flux is closed along the radial and axial directions of the machine and that the shape thereof is basically determined by the geometry of the iron. This means that the length of the iron required in the magnetic circuit determines the total weight of the machine. Furthermore, it has the drawback that once the iron is saturated, the flux distribution is abruptly modified, causing high leakage flux and, as a result, poor use of the current circulating through the windings with respect to force generation.

Up to now, ways to reduce the length of the magnetic circuit in both prismatic and circular configurations have been studied in order to reduce the leakage flux and the negative effect thereof; however, the force produced between both sides of the machine throughout the different relative positions between the two sides is highly affected and significantly reduced with respect to the maximum theoretical value.

Also known in the state of the art is the so-called multi-translator arrangement, which is an extension of the double-sided SRM in which intermediate active and passive elements (windings and poles) are introduced. Although the length of the path of the magnetic flux is minimised on the intermediate elements, it is necessary to use two return yokes to close the magnetic circuit, which increases the weight and the leakage flux. Furthermore, since it has a prismatic geometry, it is not ideal when the space available in the application is circular, as in the case of a power supply for wave energy extraction applications or, more generally, in circular actuators.

The present invention provides a solution for both of the aforementioned problems in the state of the art given the new configuration proposed for the arrangement of the magnetic circuit.

### DESCRIPTION OF THE INVENTION

The present invention solves the technical problem posed by means of a switched reluctance machine comprising:
- at least one phase which in turn comprises:
   ∘ at least one winding wound around an iron core corresponding to the at least one winding, configured to act as an active side of the machine;
- at least one iron structure configured to act as a passive side of the machine, which in turn comprises:
   ∘ at least one iron pole;
- at least one air gap arranged between the iron core corresponding to the at least
   one winding and the at least one iron pole of the at least one iron structure,
wherein the assembly formed by the at least one winding wound around the corresponding iron core, the at least one iron pole and the at least one air gap has a toroidal configuration.

The reluctance machine configured as such can be used either as a motor or as a generator. The special arrangement of the components thereof forming a toroidal configuration enables a magnetic flux with flux lines in an azimuthal direction to be generated, which is induced in the at least one winding wound around the iron core that is closed by means of the at least one iron pole and the at least one air gap arranged between the iron core where the at least one winding is wound and the at least one iron pole is located.

Optionally, the at least one winding wound around the corresponding iron core is movable with respect to the at least one iron pole in a direction perpendicular to the plane formed by the magnetic flux lines, a direction perpendicular to a plane formed by the magnetic flux lines being understood as the axial direction defined by the axis of the toroidal configuration.

Optionally, the at least one iron pole is movable with respect to the at least one winding wound around the corresponding iron core in a direction perpendicular to a plane formed by the magnetic flux lines, a direction perpendicular to a plane formed by the magnetic flux lines being understood as the axial direction defined by the axis of the toroidal configuration.

Thus configured, the switched reluctance machine of the present invention has a greater specific force (force per unit of mass and force per unit of current circulating in the windings) and is especially suitable for applications in which the space in which the machine is housed has a circular geometry, as is the case for wave energy converters in which a linear machine is arranged inside a cylindrical tube, as well as for cylindrical actuators or free-piston generators.

The operating principle of switched reluctance machines (SRMs), and specifically of the invention proposed, is simple and it is based on sequentially turning on and turning off the at least one winding that forms the phase of the active side. If the phase comprises more than one winding, all of the windings of the phase simultaneously turn on and turn off. When the active side formed by the at least one winding or windings is activated, a magnetic flux is established which is closed through the passive side of the at least one iron pole that forms the passive side of the machine. If the phase comprises more than one iron pole, a magnetic flux is established which is closed through all of the iron poles that form the structure of the passive side of the machine facing the cited phase.

When the machine functions as a motor, one of the sides tries to move in order to minimise the reluctance of the magnetic circuit (aligning the windings of the active side and the iron poles of the passive side), thereby producing a force that is used to actuate a mechanical load. However, when the machine works as a generator, an external force moves one side with respect to the other, increasing the reluctance and generating electrical power.

Once the windings of the at least one phase turn off, a new phase is activated and the aligning process (motor) or dealigning process (generator) of the iron poles with the windings is initiated again.

The main advantage of using this type of configuration lies in that the length of the magnetic circuit is reduced and therefore less iron is used both for the iron poles and for the windings, which for practical purposes will mean greater operational efficiency.

The number of windings to be placed circumferentially on each phase of the present invention will be defined by the force that must be created, and by the space available in the switched reluctance machine (SRM).

To actuate the machine, a Power Electronic Converter is required, which is responsible for activating each phase in the corresponding order. The converter will be controlled by a position sensor that indicates which phase must turn on and when. It will also include the corresponding control system to define the current that must circulate in each phase.

The configuration proposed has the following advantages:
- The azimuthal arrangement of the different windings, iron poles and air gaps minimises the leakage flux between the windings and the passive poles, making the machine more efficient in producing force (optimising the Force produced/Power current ratio). Reducing the leakage flux makes the machine more efficient in terms of the force created per unit of current in the windings.
- The toroidal configuration of the machine makes it especially suitable for applications in which a circular geometry is required, or when said geometry is more convenient, as is the case of Wave Energy Converters, Free-piston Generators or Circular Actuators.

These advantages allow the switched reluctance machine of the present invention to be more compact and efficient and especially suitable for applications in which linear movement is required along the axis of a tube with a circular cross section.

### DESCRIPTION OF THE DRAWINGS

To complement the description that is being made and for the purpose of helping to better understand the features of the invention according to a preferred practical exemplary embodiment thereof, a set of drawings is attached as an integral part of said description in which the following is depicted in an illustrative and non-limiting manner:
Figure 1 shows a perspective view of one phase of the switched reluctance machine according to the configuration proposed in the present invention.
Figure 2 shows a perspective view of a particular exemplary embodiment of a switched reluctance machine with three phases and 8 windings per phase according to the present invention.
Figure 3a shows a particular design of the switched reluctance machine of the present invention, which comprises an outer support for the passive poles and an inner support for the active windings.
Figure 3b shows a particular design of the switched reluctance machine of the present invention, which comprises an inner support for the passive poles and an outer support for the active windings.

### PREFERRED EMBODIMENT OF THE INVENTION

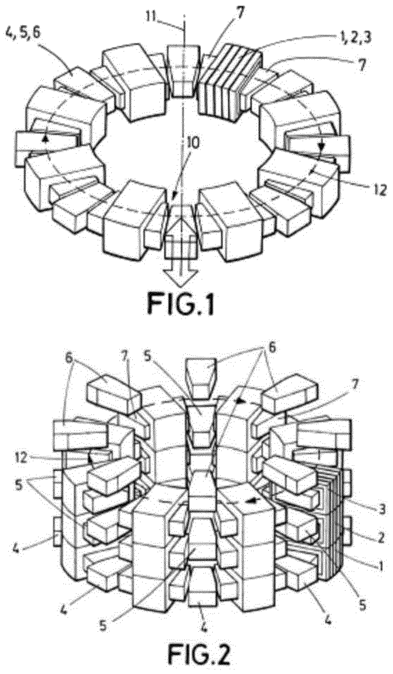

A detailed description of a preferred embodiment of the invention is provided below with the aid of the aforementioned Figures 1 to 3.

In general terms, each one of the phases that constitute the active side of the machine comprises 4, 6, 8, 10, 12 or 24 windings (1, 2, 3) for this preferred embodiment of the invention, each one of which will be wound around an iron core (7). Each one of Figures 1, 2 and 3 shows at least one winding (1, 2, 3) with the corresponding coils thereof, wound around the iron core (7) to facilitate the understanding of the arrangement thereof in the invention. Furthermore, each structure that constitutes one part of the passive side of the machine comprises 4, 6, 8, 10, 12 or 24 poles (4, 5, 6) for this preferred embodiment of the invention, in other words, the same as the number of windings (1, 2, 3) per phase. The number of phases and of the existing iron structures will depend on the chosen design, not being limited to the configuration shown in this preferred embodiment of the invention.

In a first preferred embodiment of the invention, the reluctance machine comprises 3 phases, wherein each one of the phases preferably comprises 4, 6, 8, 10, 12 or 24 windings (1, 2, 3), each one of which will be wound around an iron core (7), and wherein the machine comprises at least three iron structures, wherein each one of which comprises the same number of iron poles (4, 5, 6) as there are windings (1, 2, 3) for a phase, meaning preferably 4, 6, 8, 10, 12 or 24, respectively.

In a preferred embodiment, the switched reluctance machine comprises 3 phases, with 8 windings in each phase. Therefore, there will be a total of 24 windings (1, 2, 3), each one of which will be wound around an iron core (7). Furthermore, the passive side has an assembly of at least 3 iron structures, of which two of these iron structures are arranged in correspondence with the 3 phases, wherein each iron structure comprises eight iron poles (4, 5, 6), meaning a total of 16 iron poles (4, 5, 6), each air gap being arranged between the iron core (7) wherein each winding (1, 2, 3) is wound and each iron pole (4, 5, 6) is located, when the corresponding iron pole (4, 5, 6) is facing the iron core (7) wherein each winding (1, 2, 3) is wound.

If the Azimuthal SRM according to Figure 2 works as a motor, the eight iron poles (4) of the passive side shown in the lower part of the machine will be aligned with the eight windings (1) of the first phase at a specific moment, as shown in Figure 2. At that moment, said phase is turned off as the eight windings (2) constituting the second phase are turned on, such that the corresponding eight iron poles (5) of the passive side shown in the intermediate part of the machine are attracted to the windings (2) in order to minimise the reluctance of the circuit in a downward direction perpendicular (11) to the plane formed by the magnetic flux lines (12), as indicated by the arrow in Figure 2. Once the poles and the windings are aligned, the second phase is turned off to begin a new process, turning on the third phase to align the eight iron poles (6) of the passive side shown in lower part of the machine with the corresponding 8 windings (3) of said third phase.

If the machine works as a generator, based on the position of Figure 2, the first phase would turn on and the 8 iron poles (4) shown in the lower part of the machine would begin to separate from the windings (1) of the first phase and move toward the eight windings (2) corresponding to the second phase, in an upward direction perpendicular (11) to the plane formed by the magnetic flux lines (12), at the same time that the eight iron poles (5) shown in the intermediate part of the machine move to become aligned with the eight windings (3) corresponding to the third phase. At this moment, the first phase is disconnected and the second phase is energised. The process would continue switching from the second phase to the third phase.

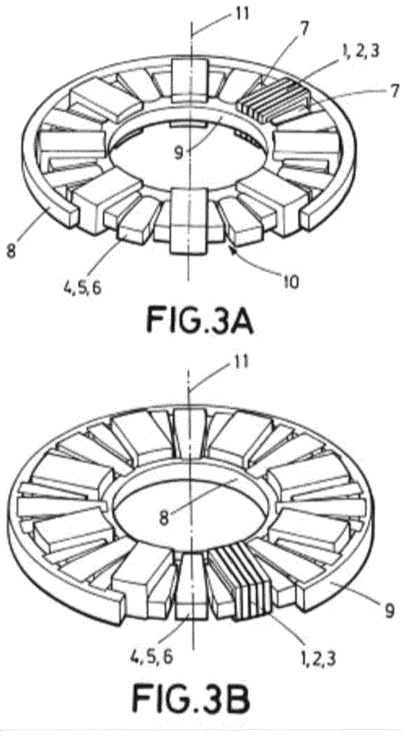

With regard to the physical design, it is worth mentioning that the passive and active sides will each be fixed by their own support ring (8, 9), as can be seen in Figures 3a and 3b, which show two particular embodiments of the machine. The machine comprises guide means (not shown) configured to move one support ring (8, 9) with respect to the other support ring (9, 8), which are not mechanically connected and, therefore, would be assembled forming two independent, as well as integral systems. One of them (passive or active) will be established as a mobile side and the other (active or passive) as a fixed side, but it is not established which one will be which, as this is to be decided based on the design conditions of each case.

The movement of the set of poles (4, 5, 6) with respect to the windings (1, 2, 3) is relative, such that two configurations are possible: one in which the poles (4, 5, 6) move and the windings (1, 2, 3) remain at rest, and another in which the windings (1, 2, 3) move and the poles (4, 5, 6) remain at rest.

## Claims

1. A switched reluctance machine comprising:
- at least one phase which in turn comprises:
∘ at least one winding (1, 2, 3) wound around an iron core (7) corresponding to the at least one winding, configured to act as an active side of the machine;
- at least one iron structure configured to act as a passive side of the machine, which in turn comprises:
∘ at least one iron pole (4, 5, 6);
- at least one air gap (10) arranged between the iron core (7) corresponding to the at least one winding (1, 2, 3) and the at least one iron pole (4, 5, 6);
**characterised in that** the assembly formed by the at least one winding (1, 2, 3) wound around the corresponding iron core (7), the at least one iron pole (4, 5, 6) and the at least one air gap (10) has a toroidal configuration, such that it generates a magnetic flux with flux lines (12) in an azimuthal direction.

2. The switched reluctance machine according to claim 1, **characterised in that** the at least one winding (1, 2, 3) wound around the corresponding iron core (7) is movable with respect to the at least one iron pole (4, 5, 6) in a direction perpendicular (11) to a plane formed by the magnetic flux lines (12).

3. The switched reluctance machine according to claim 1, **characterised in that** the at least one iron pole (4, 5, 6) is movable with respect to the at least one winding (1, 2, 3) wound around the corresponding iron core (7) in a direction perpendicular (11) to a plane formed by the magnetic flux lines (12).

4. The switched reluctance machine according to any of the preceding claims, **characterised in that** the passive and active sides are fixed to a support ring (8, 9), respectively (8, 9).

5. The switched reluctance machine according to claim 4, **characterised in that** it comprises guide means configured to move one support ring (8, 9) with respect to the other support ring (9, 8).

6. The switched reluctance machine according to any of the preceding claims, **characterised in that** it comprises 2 phases, wherein each one of the phases preferably comprises 4, 6, 8, 10, 12 or 24 windings (1, 2, 3), each one of which will be wound around an iron core (7), and wherein the machine comprises the same number of iron poles (4, 5, 6) with respect to the windings (1, 2, 3) of a phase, meaning preferably 4, 6, 8, 10 12 or 24, respectively.

7. The switched reluctance machine according to any of claims 1 to 5, **characterised in that** it comprises 3 phases, wherein each one of the phases preferably comprises 4, 6, 8, 10, 12 or 24 windings (1, 2, 3), each one of which will be wound around an iron core (7), and wherein the machine comprises at least 2 iron structures with the same number of iron poles (4, 5, 6) with respect to the windings (1, 2, 3) of a phase, meaning preferably 4, 6, 8, 10, 12 or 24, respectively.
